# EUROPEAN PATENT SPECIFICATION

(11) **EP 3 985 837 B1**
(45) Date of publication and mention of the grant of the patent: **01.04.2026**
(21) Application number: 21157819.0
(22) Date of filing: 18.02.2021
(51) Int. Cl.: H02K 1/16

(54) **FAN MOTOR**
VENTILATORMOTOR
MOTEUR DE VENTILATEUR

(30) Priority: 13.10.2020 KR 20200131943
(43) Date of publication of application: 20.04.2022
(73) Proprietor: LG Electronics Inc., Seoul 07336 (KR)
(72) Inventor: KIM, Mijung, 06772 Seoul (KR); KIM, Dosun, 06772 Seoul (KR); CHOI, Inho, 06772 Seoul (KR); CHOI, Yangkwang, 06772 Seoul (KR); YOON, Jinho, 06772 Seoul (KR)
(74) Representative: Vossius & Partner Patentanwälte Rechtsanwälte mbB

(56) References cited:
- EP-A1- 2 975 341
- JP-A- 2005 287 240
- US-A- 4 071 793
- US-A1- 2005 258 706
- US-A1- 2014 346 918

## Description

### BACKGROUND OF THE DISCLOSURE

### Field of the disclosure

The present disclosure relates to a fan motor and, more particularly, to a fan motor which is applied to a fridge and can provide a driving power for circulating cold air within a storage space.

### Related Art

In general, a fridge is an apparatus for cooling storerooms, such as a refrigerator and a freezer using a cooling cycle device composed of a compressor, a condenser, expansion equipment, and an evaporator.

In a fridge having such a configuration, a heat exchange chamber is provided at the back of the freezer, and the evaporator is provided within the heat exchange chamber.

The evaporator functions to generate cold air through a heat exchange between a low-temperature refrigerant circulating therein and surrounding air.

Furthermore, the heat exchange chamber is equipped with a ventilation fan for flowing the cold air subjected to a heat exchange with a refrigerant within the evaporator and a fan motor for providing a driving power for rotating the ventilation fan.

The fan motor includes a motor casing forming an external appearance of the fan motor, a stator provided within the motor casing, and a rotor inserted into the stator. The rotor performs a rotary motion on a shaft by an electromagnetic interaction with the stator.

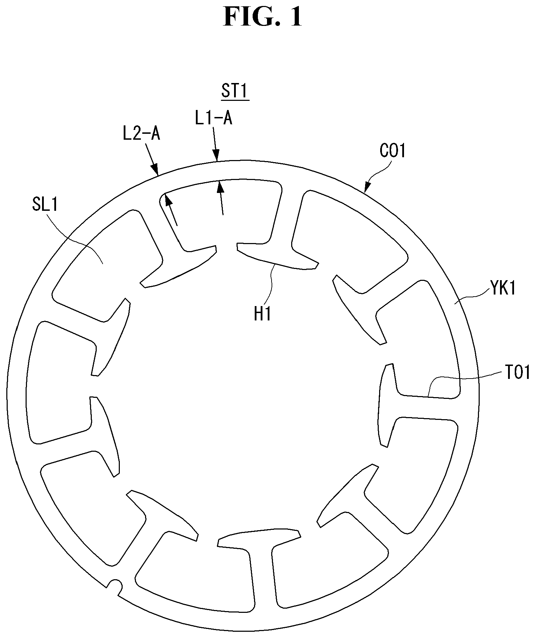

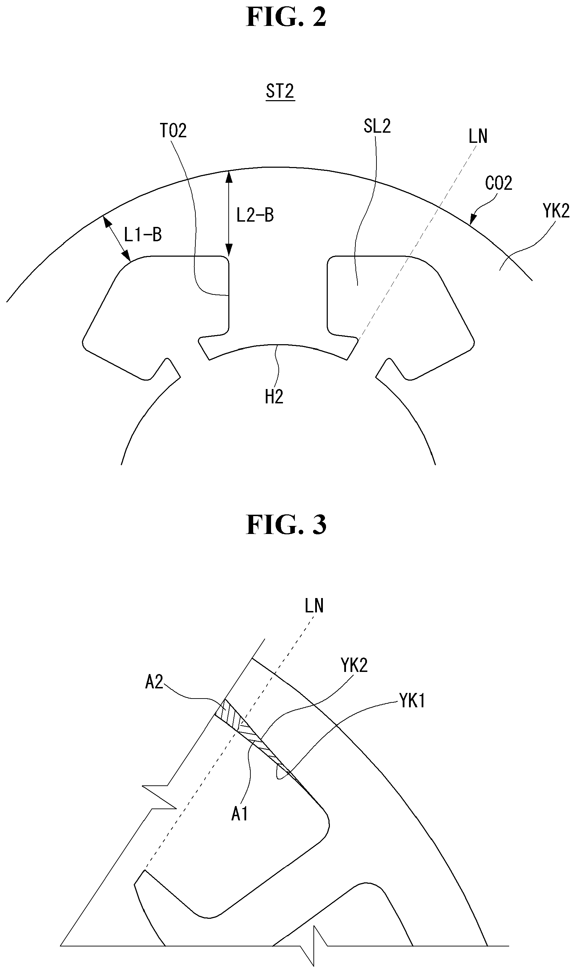

FIG. 1 illustrates a plan view of a stator included in a teeth-concentrated winding fan motor according to a conventional example. The stator of FIG. 1 is disclosed in CN 102522858 B. FIG. 2 illustrates a plan view illustrating major elements of a stator included in a teeth-concentrated winding fan motor according to a conventional example. The stator of FIG. 2 is disclosed in US 2002/0130580 A1.

As illustrated in FIGS. 1 and 2, a stator ST1, ST2 includes a stator core CO1, CO2. The stator core CO1, CO2 includes yokes YK1, YK2 and a plurality of teeth TO1, TO2.

The yoke YK1, YK2 may have a cylindrical shape in which a hollow H1, H2 is formed at the center thereof. A rotor core (not illustrated) is rotatably installed within the hollow H1, H2.

In this case, the plurality of teeth TO1, TO2 is spaced apart from each other at given intervals. A sot SL1, SL2 is formed between adjacent two teeth TO1, TO2. A winding (i.e., stator coil) wound on the tooth TO1, TO2 is located in the slot SL1, SL2.

Furthermore, an insulator, such as a bobbin or insulator paper, is located between the winding and the tooth TO1, TO2.

In the teeth-concentrated winding fan motor having the stator ST1, ST2 having such a configuration, in particular, a teeth-concentrated winding fan motor having a low magnetic flux density of 1.7 tesla or less, a space factor is a very important factor in determining efficiency of the fan motor.

In this case, the "space factor" means a percentage of a portion which is actually used among a space, and may be indicated as {(a total cross section of a winding wound on a tooth)/cross section of a slot}.

Accordingly, if the space factor is increased, efficiency of the fan motor can be improved because the number of turns of the winding or the diameter of the winding can be increased in accordance with the increased space factor.

However, in the stator ST1 illustrated in FIG. 1, the width of the yoke YK1 in the length thereof is uniform in the circumferential direction thereof. That is, in the stator ST1 illustrated in FIG. 1, a length L1-A of the yoke YK1 at a central portion of the slot SL1 in the circumferential direction and a length L2-A of the yoke YK1 at a tooth portion of the slot SL1 are the same.

Accordingly, the stator ST1 illustrated in FIG. 1 cannot obtain a satisfactory space factor because the area of a slot on which the winding is wound is not sufficiently secured. Accordingly, there is a problem in that efficiency of the fan motor is not effectively improved.

Furthermore, the stator ST2 illustrated in FIG. 2 was not developed to improve the space factor. A length L1-B of the yoke YK2 at a central portion of the slot in a circumferential direction thereof is the smallest, and a length L2-B of the yoke YK2 at a tooth portion of the slot is the greatest.

Accordingly, assuming that the length L2-B of the yoke YK2 at the tooth portion of the stator ST2 is the same as each of the length L1-A of the yoke YK1 at the central portion of the slot SL1 of the stator ST1 in the circumferential direction and the length L2-A of the yoke YK1 at the tooth portion, as illustrated in FIG. 3, the area of the slot of the stator ST2 may be increased by an area A1+A2, that is, the sum of the area of a first region A1 and the area of a second region A2, compared to the area of the slot of the stator ST1.

However, the winding is not wound up to the central portion of the slot in the circumferential direction, but is wound up to only a winding work limit line LN adjacent to the central portion of the slot in the circumferential direction. Although there is a portion where the length of the yoke is reduced from the winding work limit line LN to the central portion of the slot SL2 in the circumferential direction, the winding is not wound on the portion.

Accordingly, the stator ST2 can increase the area of the slot by the sum of the areas of the first region A1 and the second region A2 compared to the stator ST1, but may contribute to the improvement of the space factor by the area of the first region A1 and does not contribute the improvement of the space factor by the area of the slot increased due to the second region A2. Accordingly, the stator ST2 cannot obtain a satisfactory space factor increase effect.

Accordingly, the stator ST2 illustrated in FIG. 2 has an effect in that the space factor is increased by the area of the first region A1 due to the increase area of the slot compared to the stator ST1 illustrated in FIG. 1, but has a problem in that it does not greatly improve efficiency of the fan motor because the space factor increase effect is very small due to the aforementioned problems.

Furthermore, the stator ST2 has a concern that the yoke YK2 may be damaged at the central portion of the slot in the circumferential direction and durability and reliability may be low compared to the stator ST1 because the length L1-B of the yoke YK2 at the central portion of the slot in the circumferential direction is the smallest and the length L2-B of the yoke YK2 at the tooth portion is the greatest.

As described above, in a fan motor having a low magnetic flux density of 1.7 tesla or less, the space factor has a great influence on efficiency of the fan motor.

In order to increase the space factor, the area of a slot needs to be increased. A method of increasing the length of a tooth is used to increase the area of a slot.

In this case, however, there are problems in that the size of the stator core is increased due to the increased length of the tooth and reliability and durability of the stator core are reduced because strength of the tooth is reduced.

Furthermore, the area of a slot may be increased by minimizing the length of the yoke in a radial direction thereof. The length of the yoke in the radial direction cannot be easily reduced because most of current stator cores are each fabricated to have a minimum thickness of about 1.5 mm by considering durability and reliability.

Furthermore, as in the conventional stator illustrated in FIG. 2, there is a method of increasing the area of a slot by further increasing the thickness of some of the yoke. However, as described above, the conventional stator illustrated in FIG. 2 has a very low space factor increase effect because only some of the area of a slot can contribute to the improvement of the space factor.

US 2005/258706 A1 discloses a segmented stator for a brushless permanent magnet electric machine. EP 2 975 341 A1 discloses a refrigerator having a fan motor unit. US 2014/346918 A1 discloses a motor which can reduce an increase in magnetic reluctance of a core back of a motor.

### SUMMARY

The present disclosure has been made to solve the aforementioned problems, and provides a fan motor having a low magnetic flux density of 1.7 tesla or less, satisfying a flux saturation level, and having improved efficiency.

Furthermore, the present disclosure provides a fan motor including a state, which can effectively increase the space factor without increasing the size of an external diameter.

Furthermore, the present disclosure provides a fan motor capable of increasing efficiency by decreasing a copper loss.

Furthermore, the present disclosure provides a fan motor capable of increasing efficiency by increasing torque.

The objects of the present disclosure are not limited to the aforementioned objects, and other objects and advantages of the present disclosure not described above may be understood from the following description and evidently understood based on embodiments of the present disclosure.

Furthermore, it may be easily seen that the objects and advantages of the present disclosure can be realized by the invention as defined in claim 1.

There is provided a fan motor including a stator having an improved stator core shape.

In an aspect, a first interval between an internal central point of the stator core of a stator included in a fan motor and an inner circumferential surface of a yoke at a tooth portion is greater than a second interval between an internal central point of the stator core and an inner circumferential surface of the yoke at a central portion of a slot in a circumferential direction thereof. Herein, the term "inner circumferential surface of a yoke at a tooth portion" refer to the transition or connection between the yoke and the root of a tooth.

Accordingly, in each slot, a first length of the yoke at the tooth portion in the radiation length thereof is smaller than a second length of the yoke in the radiation length thereof at the central portion of the slot in the circumferential direction thereof. A portion having a relatively small length is located at the tooth portion not the central portion of the slot in the circumferential direction.

Accordingly, although the length of one portion of the yoke is reduced, a bending phenomenon occurring in the stator core in a process of fabricating the stator core (e.g., punching) can be suppressed. Durability, reliability and productivity of the stator core can be maintained identically or similar to the conventional stator core illustrated in FIG. 1.

Furthermore, the area of a slot can be increased because the length of a tooth can be increased by a difference between the first interval and the second interval compared to the conventional stator cores of FIGS. 1 and 2. The space factor can be effectively increased compared to the conventional stator cores illustrated in FIGS. 1 and 2 because a winding can be wound by the increased area of the slot.

According to an embodiment of the present disclosure, a stator of a fan motor includes a stator core having a form in which a first interval between an internal central point of the stator core and an inner circumferential surface of a yoke at a tooth portion is greater than a second interval between an internal central point of the stator core and the inner circumferential surface of the yoke at a central portion of the slot in a circumferential direction thereof, or a form in which a first length of the yoke at the tooth portion in a radiation length thereof is smaller than a second length of the yoke in the radiation length thereof at the central portion of the slot in the circumferential direction thereof, or a form having both the characteristics.

Accordingly, the space factor can be effectively increased without increasing the size of an external diameter of the stator core.

For example, the stator included in the fan motor according to an embodiment of the present disclosure can increase the space factor by about 7% to 10% compared to the conventional stator illustrated in FIG. 1.

Furthermore, the stator included in the fan motor according to an embodiment of the present disclosure can increase the space factor by about 5% to 7% compared to the conventional stator illustrated in FIG. 2.

Furthermore, when comparing the stator according to an embodiment of the present disclosure with the conventional stators illustrated in FIGS. 1 and 2, if windings are wound in the same turn number, the diameter of the winding can be increased as much as the increased area of a slot compared to the stators illustrated in FIGS. 1 and 2.

Accordingly, when comparing the fan motor according to an embodiment of the present disclosure with the conventional fan motors including the conventional stators illustrated in FIGS. 1 and 2, the fan motor according to an embodiment of the present disclosure can implement torque similar to that of the conventional fan motor, can decrease a copper loss because the diameter of a winding is increased compared to the conventional fan motor, and can thus increase efficiency.

Furthermore, when comparing the stator according to an embodiment of the present disclosure with the conventional stators illustrated in FIGS. 1 and 2, if windings having the same diameter are wound, the turn number can be increased as much as the increased area of a slot compared to the stators illustrated in FIGS. 1 and 2.

Accordingly, when comparing the fan motor according to an embodiment of the present disclosure with the conventional fan motors including the conventional stators illustrated in FIGS. 1 and 2, the fan motor according to an embodiment of the present disclosure increases a copper loss compared to the conventional fan motors due to the increased turn number, but can increase an output density because torque is increased at a ratio greater than a ratio at which the copper loss is increased, and thus can improve efficiency.

Detailed effects of the present disclosure along with the aforementioned effects are described while hereinafter describing detailed contents for implementing the present disclosure.

### BRIEF DESCRIPTION OF THE DRAWINGS

FIG. 1 is a plan view of a stator according to an example of a conventional technology.
FIG. 2 is a plan view illustrating major elements of a stator according to another example of a conventional technology.
FIG. 3 is a diagram for comparing the area of a slot of the stator of FIG. 1 and the stator of FIG. 2.
FIG. 4 is a front view illustrating the inside of a fridge to which a fan motor according to an embodiment of the present disclosure may be applied.
FIG. 5 is a cross-sectional view taken along line A-A in FIG. 4.
FIG. 6 is an exploded perspective view illustrating major elements of the fridge illustrated in FIG. 4.
FIG. 7 is a front view illustrating the shroud and fan of the fridge illustrated in FIG. 4.
FIG. 8 is a plan view schematically illustrating a method of winding a winding in a fan motor to which a stator according to an embodiment of the present disclosure may be applied.
FIG. 9 is a side exploded view of the stator included in the fan motor illustrated in FIG. 8.
FIG. 10 is a plan view of a stator which may be applied to a fan motor according to an embodiment of the present disclosure.
FIG. 11 is a diagram for comparing the area of a slot of the stator according to an embodiment of the present disclosure and the areas of slots of the conventional stator illustrated in FIG. 1 and the conventional stator illustrated in FIG. 2.
FIG. 12 is a diagram for comparing magnetic flux density distributions of the conventional stator illustrated in FIG. 1 and the stator according to an embodiment of the present disclosure illustrated in FIG. 10, and is a diagram illustrating a case where the turn numbers of windings are the same and the diameters of the windings are different.
FIG. 13 is a diagram for comparing magnetic flux density distributions of the conventional stator illustrated in FIG. 1 and the stator according to an embodiment of the present disclosure illustrated in FIG. 10, and is a diagram illustrating a case where the turn numbers of windings are different and the diameters of the windings are the same.

### DESCRIPTION OF EXEMPLARY EMBODIMENTS

Hereinafter, embodiments of the present disclosure are described in detail with reference to the accompanying drawings, in order for a person having ordinary skill in the art to which the present disclosure pertains to carry out the present disclosure. The present disclosure may be modified in various different ways, and is not limited to the disclosed embodiments herein.

In order to clarify a description of the present disclosure, a description of parts not related to the description is omitted, and the same reference numbers are used throughout the specification to refer to the same or like parts.

Furthermore, some embodiments of the present disclosure are described in detail with reference to illustrative drawings. In assigning reference numerals to elements in the drawings, the same elements may have the same reference numerals throughout the drawings even in cases where the elements are shown in different drawings.

Furthermore, in describing the embodiments of the present disclosure, a detailed description of the known functions and constitutions will be omitted if it is deemed to make the gist of the present disclosure unnecessarily vague.

In describing an element of the present disclosure, when it is said that one element is "connected", "combined", or "coupled" to the other element, the one element may be directly connected or coupled" to the other element, but it should also be understood that a third element may be "interposed" between the two elements or one element may be "connected", "combined", or "coupled" between the other element.

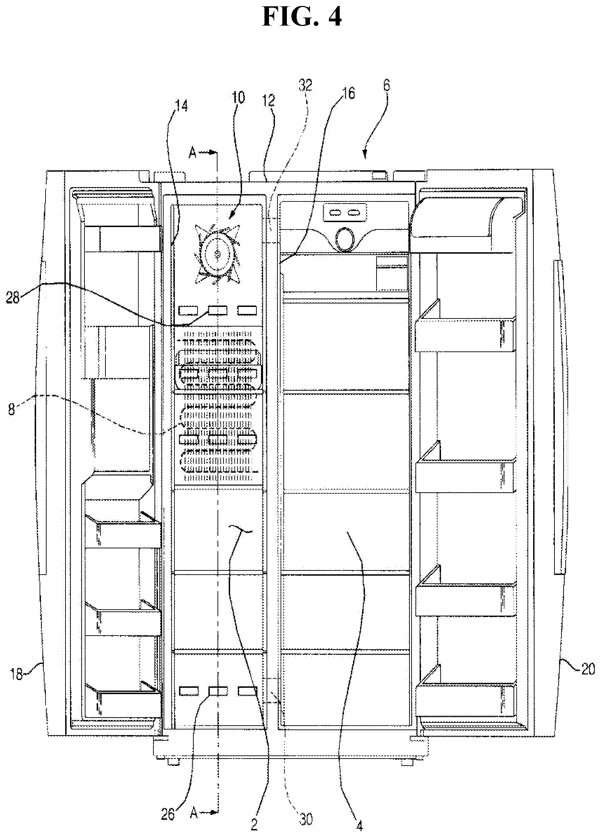

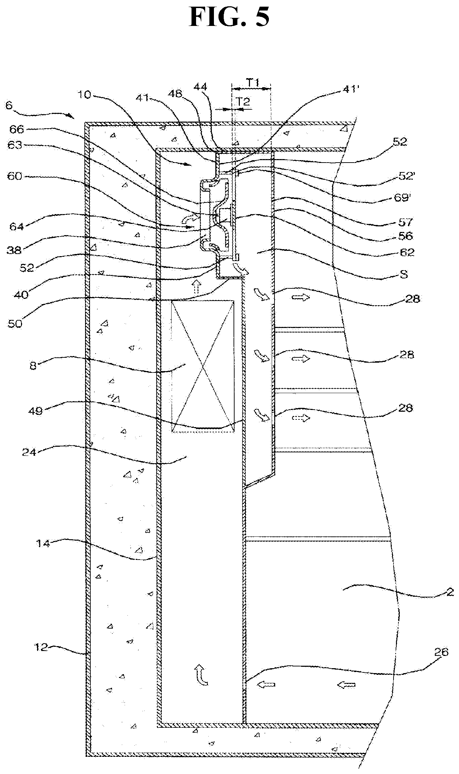

FIG. 4 is a front view illustrating the inside of a fridge to which a fan motor according to an embodiment of the present disclosure may be applied. FIG. 5 is a cross-sectional view taken along line A-A in FIG. 4.

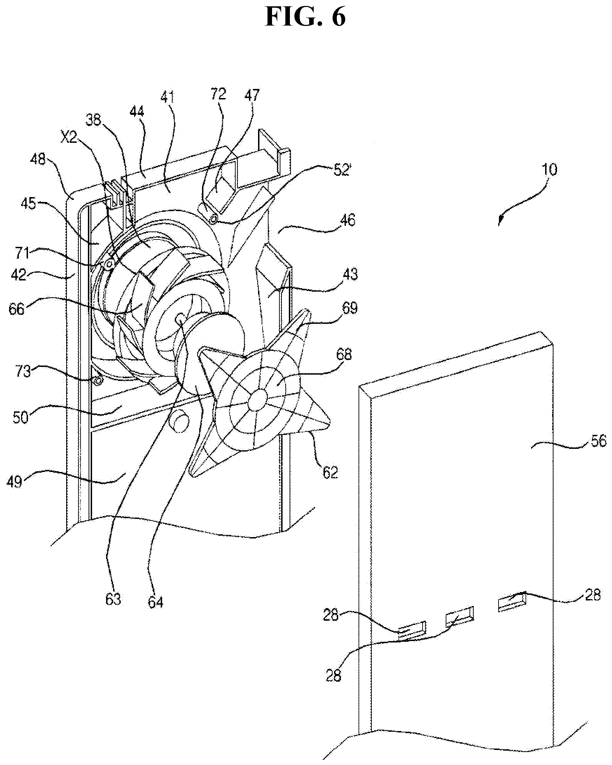

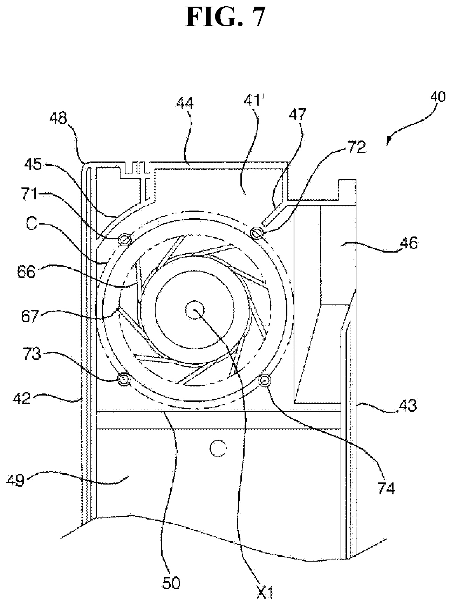

Furthermore, FIG. 6 is an exploded perspective view illustrating major elements of the fridge illustrated in FIG. 4. FIG. 7 is a front view illustrating the shroud and fan of the fridge illustrated in FIG. 4.

The fridge may include a main body 6 in which storerooms 2 and 4 are formed, an evaporator 8 for cooling the storerooms 2 and 4, and a fan assembly 10 for circulating air within the storerooms 2 and 4 to the evaporator 8 and the storerooms 2 and 4.

A single storeroom may be formed or a plurality of storerooms may be formed in the main body 6. If a plurality of storerooms is formed, the plurality of storerooms may be maintained at different temperature bands.

If a plurality of storerooms is formed, the number of storerooms may be 2, 3, 4, etc. and is not limited.

Any one of the plurality of storerooms may be a freezer 2, and the other of the plurality of storerooms may be a refrigerator 4.

Hereinafter, an example in which the main body 6 is equipped with the freezer 2 and the refrigerator 4 is described.

A cooling cycle device including the evaporator 8 may be installed in the main body 6. The cooling cycle device may further include a compressor (not illustrated) for compressing a refrigerant, a condenser (not illustrated) for condensing the refrigerant compressed by the compressor, and expansion equipment (not illustrated) for expanding the refrigerant condensed by the condenser. The compressor, the condenser, and the expansion equipment may be installed in the main body 6 along with the evaporator 8.

When the refrigerant is compressed by the compressor, the compressed refrigerant may flow into the condenser. The refrigerant passing through the condenser may flow into the expansion equipment. The refrigerant passing through the expansion equipment may flow into the evaporator. The refrigerant passing through the evaporator may flow into the compressor.

The main body 6 may include an outer casing 12 forming an external appearance, and inner casings 14 and 16 disposed within the outer casing 12 and having the storerooms 2 and 4 formed therein.

Each of the inner casings 14 and 16 may be formed in a box shape having one face opened. Food, drink, etc. may enter or exit from the opened face.

The inner casings 14 and 16 may be integrated into one inner casing as one member, or a plurality of members may be combined to form one inner casing.

The inner casings 14 and 16 may include a first inner casing 14 having the freezer 2 formed therein and a second inner casing 16 having the refrigerator 4 formed therein.

The fridge may include a door for opening and shutting the storeroom. The door may include a freezer door 18 for opening and shutting the freezer 2 and a refrigerator door 20 for opening and shutting the refrigerator 4.

The number of each of the freezer door 18 and the refrigerator door 20 may be one or two or more.

A refrigerant within the evaporator 8 is subjected to a heat exchange with air within the storerooms 2 and 4. The refrigerant passing through the evaporator 8 may be evaporated through a heat exchange with the air. The air may be cooled through the heat exchange with the refrigerant the refrigerant.

A plurality of evaporators may be installed in the fridge. Any one of the plurality of evaporators may cool the freezer 2, and the other thereof may cool the refrigerator 4.

In another embodiment, the fridge may include only one evaporator for cooling both the freezer 2 and the refrigerator 4.

Hereinafter, an example in which one evaporator 8 cools both the freezer 2 and the refrigerator 4 is described.

A refrigerant within the evaporator 8 may be subjected to a heat exchange with air within the freezer 2 and air within the refrigerator 4. If only one evaporator 8 is provided, the evaporator 8 may be installed closer to the freezer 2 than the refrigerator 4.

A heat exchange room 24 in which the evaporator 8 is installed may be formed in the main body 6. The heat exchange room 24 may communicate with the storerooms 2 and 4. The heat exchange room 24 may communicate with the freezer 2 or may communicate with the freezer 2 and the refrigerator 4.

The heat exchange room 24 may be formed outside the inner casings 14 and 16, and may communicate with at least one of the inner casings 14 and 16.

In another embodiment, the heat exchange room 24 may be formed within at least one of the inner casings 14 and 16. In this case, a partition member may be installed within at least one of the inner casings 14 and 16. Hereinafter, an example in which the partition member is installed within at least one of the inner casings 14 and 16 is described.

If the partition member is installed within the first inner casing 14, the inside of the first inner casing 14 may be partitioned into the freezer 2 and the heat exchange room 24.

In this case, a suction hole 26 through which air within the freezer 2, that is, a storeroom, is sucked into the heat exchange room 24 and a discharge hole 28 through which air cooled by the evaporator 8 is discharged from the heat exchange room 24 to the freezer 2, that is, a storeroom, may be formed in the partition member.

If the partition member is installed within the first inner casing 14, the evaporator 8 may be positioned between the first inner casing 14 and the partition member. In this case, a cold air suction duct 30 and a cold air discharge duct 32 for enabling the inside of the first inner casing 14 and the inside of the second inner casing 12 to communicate with each other may be formed in the main body 6.

The cold air suction duct 30 may enable one of the heat exchange room 24 and the freezer 2 to communicate with the refrigerator 4. The cold air discharge duct 32 may enable the fan assembly 10 and the refrigerator 4 to communicate with each other.

Air cooled by the evaporator 8 may be sucked from the heat exchange room 24 to the fan assembly 10, and may be discharged to the freezer 2 through the discharge hole 28. After the air flows within the freezer 2, the air may be sucked into the heat exchange room 24 through the suction hole 26 and cooled again by the evaporator 8.

The air cooled by the evaporator 8 may be sucked from the heat exchange room 24 to the fan assembly 10, and then discharged to the refrigerator 4 through the cold air discharge duct 32. After the air flows within the refrigerator 4, the air may be sucked into the heat exchange room 24 through the cold air suction duct 30 and cooled again by the evaporator 8.

If the partition member is installed within the second inner casing 16, the inside of the second inner casing 16 may be partitioned into the refrigerator 4 and the heat exchange room 24.

In this case, the suction hole 26 through which air within the refrigerator 4, that is, a storeroom, can be sucked into the heat exchange room 24 and the discharge hole 28 through which air cooled by the evaporator 8 is discharged from the heat exchange room 24 to the refrigerator 4, that is, storeroom, may be formed in the partition member.

If the partition member is installed within the second inner casing 16, the evaporator 8 may be positioned between the second inner casing 14 and the partition member. In this case, the cold air suction duct 30 and the cold air discharge duct 32 for enabling the inside of the first inner casing 14 and the inside of the second inner casing 12 to communicate with each other may be formed in the main body 6.

The cold air suction duct 30 may enable the heat exchange room 24 and the freezer 2 to communicate with each other. The cold air discharge duct 32 may enable the fan assembly 10 and the freezer 4 to communicate with each other.

Air cooled by the evaporator 8 may be sucked from the heat exchange room 24 to the fan assembly 10 and then discharged to the refrigerator 4 through the discharge hole 28. After the air flows within the refrigerator 4, the air may be sucked into heat exchange room 24 through the suction hole 26 and then cooled again by the evaporator 8.

Air cooled by the evaporator 8 may be sucked from the heat exchange room 24 to the fan assembly 10 and then discharged to the freezer 2 through the cold air discharge duct 32. After the air flows within the freezer 2, the air may be sucked into the heat exchange room 24 through the cold air suction duct 30.

Hereinafter, an example in which the partition member is installed within the first inner casing 14 is described.

The partition member and the fan assembly 10 may be separately installed in the main body 6. Furthermore, the fan assembly 10 may function as the partition member. If the fan assembly 10 functions as the partition member, the number of parts can be minimized and compactness may be possible.

Hereinafter, an example in which the fan assembly 10 functions as the partition member is described.

If the fan assembly 10 solely functions as the partition member, air within the freezer 2 may be sucked into the heat exchange room 24 through the fan assembly 10, cooled by the evaporator 8, and then discharged to the freezer 2 again through the fan assembly 10. That is, the fan assembly 10 may function as a suction panel and a discharge panel.

In contrast, if the fan assembly 10 functions as part of the partition member, a separate suction panel (not illustrated) may function as the remainder of the partition member.

In this case, a suction panel may be installed under the fan assembly 10. Air within the freezer 2 may be sucked into the heat exchange room 24 through the suction panel, cooled by the evaporator 8, and then discharged to the freezer 2 again through the fan assembly 10. That is, the fan assembly 10 may function as a discharge panel.

Hereinafter, an example in which the fan assembly 10 solely functions as the partition member is described.

The fan assembly 10 may include a shroud 40 in which a suction hole 38 for sucking air subjected to a heat exchange with a refrigerant within the evaporator 8 is formed, a discharge panel 56 in which the discharge hole 28 for discharging air to the storeroom 2 is formed, and a fan motor unit 60 installed in the shroud 40.

At least one of the shroud 40 and the discharge panel 56 may partition the freezer 2 and the heat exchange room 24, and may guide, into the evaporator 8, air introduced into the heat exchange room 24.

The suction hole 26 through which air within the storeroom 2 is sucked into the heat exchange room 24 may be formed in the fan assembly 10. Hereinafter, in order to distinguish between the suction hole 26 through which air within the storeroom 2 may be sucked into the heat exchange room 24 and the suction hole 38 through which air is subjected to a heat exchange with a refrigerant within the evaporator 8, the suction hole 26 is referred to as a heat exchange room suction hole 26.

The heat exchange room suction hole 26 may be formed on the lower side of the fan assembly 10. The heat exchange room suction hole 26 may be formed in at least one of the shroud 40 and the discharge panel 56.

If the lower part of the shroud 40 constitutes the back of the freezer 2, the heat exchange room suction hole 26 may be formed at the lower part of the shroud 40.

In contrast, if the lower part of the discharge panel 56 constitutes the back of the freezer 2, the heat exchange room suction hole 26 may be formed at the lower part of the discharge panel 56.

If the lower part of the shroud 40 and the lower part of the discharge panel 56 are disposed to overlap the lower part of the first inner casing 14, the heat exchange room suction hole 26 may be formed at the lower part of the shroud 40 and the lower part of the discharge panel 56 so that the heat exchange room 24 and the freezer 2 communicate with each other.

Air cooled by the evaporator 8 may be sucked into the fan motor unit 50 through the suction hole 38. The air ventilated by the fan motor unit 50 may be discharged to the storeroom 2 through the discharge hole 28. The air discharged to the storeroom 2 may be sucked into the evaporator 8 through the heat exchange room suction hole 26.

The shroud 40 may be coupled to the discharge panel 56. The shroud 40 maybe a fan housing that surrounds the fan motor unit 60 along with the discharge panel 56.

The shroud 40 may form the heat exchange room 24 along with the inner casing 14 in which the fan assembly 10 is installed.

The heat exchange room 24 may be formed between the front of the rear plate unit of the inner casing 14 and the back of the rear plate unit of the fan assembly 10.

The heat exchange room 24 may be lengthily formed up and down. The lower part of the heat exchange room 24 may communicate with the freezer 2 through the heat exchange room suction hole 26, and the upper part thereof may communicate with the fan assembly 10 through the suction hole 38.

The shroud 40 may include a rear plate unit 41 in which the suction hole 38 is formed, and a left plate unit 42, a right plate unit 43, and an upper plate unit 44 disposed in the rear plate unit 41.

A housing unit 45 for guiding air passing through the suction hole 38 may be positioned in at least one of the shroud 40 and the discharge panel 56. The housing unit 45 may be located in a space S formed by the shroud 40 and the discharge panel 56.

The housing unit 45 may be forward protruded from the shroud 40 to the discharge panel 56 and may be backward protruded from the discharge panel 56 to the shroud 40.

The housing unit 45 may be configured using only a curved part and may be configured using a combination of a curved part and a plane part.

The housing unit 45 may be positioned at a location spaced apart from the circumference of a fan 66. The housing unit 45 may be positioned to surround the entire circumference of the fan 66 and may be positioned to surround part of the circumference of the fan 66.

An opening part 46 may be formed in at least one of the left plate unit 42 and right plate unit 43 of the shroud 40. A flow channel guide 47 for guiding air into the opening part 46 may be positioned in the rear plate unit 41 of the shroud 40 in a way to be protruded toward the discharge panel 12.

The flow channel guide 47 may be positioned to guide, into the opening part 46, air ventilated to the circumference of the fan 66. To this end, the flow channel guide 47 may be inclined toward the opening part 46.

The cold air discharge duct 32 may enable the opening part 46 and the refrigerator 4 to communicate with each other. Air discharged through the opening part 46 may flow into the refrigerator 4 through the cold air discharge duct 32.

The rear plate unit 41, left plate unit 42, right plate unit 43, and upper plate unit 44 of the shroud 40 and the lower plate unit 50 may form an accommodation unit 48 in which the fan motor unit 60 is accommodated.

The accommodation unit 48 may be formed in a box shape having a top opened. The housing unit 45, the opening part 46, and the flow channel guide 47 may be positioned in the accommodation unit 48.

The shroud 40 may include an evaporator flow channel guide unit 49 for guiding, into the evaporator 8, air flowing within the storeroom 2. The evaporator flow channel guide unit 49 may be located in front of the evaporator 8. The accommodation unit 48 may be located over the evaporator flow channel guide unit 49.

A fan motor unit installation unit 52 in which the fan motor unit 60 is installed may be positioned in a face 41' of the shroud 40 that faces the discharge panel 56. The fan motor unit installation unit 52 is described in detail later.

The discharge panel 56 may discharge, to the storeroom 2, air flown by the fan motor unit 60. The at least one discharge hole 28 may be formed in the discharge panel 56. The discharge hole 28 may be formed in plural, and a plurality of discharge holes may be spaced apart from each other.

The discharge panel 56 may be positioned to cover the front of the shroud 40, and may form the space S for guiding air discharge along with the shroud 40. The space S formed by the shroud 40 and the discharge panel 56 may be lengthily positioned up and down.

The discharge panel 56 may form an external appearance of the front of the fan assembly 10, and may be viewed from the outside when the freezer 2 is opened. The discharge panel 56 may form the freezer 2, that is, a storeroom, along with the inner casing 12 in which the fan assembly 10 is installed.

The fan motor unit 60 may flow air between the shroud 40 and the discharge panel 56. The fan motor unit 60 may be installed in the shroud 40, and may suck air through the suction hole 38 and discharge the air to the opening part 46 and the discharge hole 28.

The fan motor unit 60 may include a motor bracket 62 fastened to the fan motor unit installation unit 52, a fan motor 64 installed in the motor bracket 62 and having a shaft 63 protruded therefrom, and a fan 66 installed in the shaft 63.

The motor bracket 62 may include a motor coupling unit 68 coupled to the fan motor 64 and at least one support leg 69 protruded from the motor coupling unit. The support leg 69 of the motor bracket 62 may be coupled to the fan motor unit installation unit 52 using a fastening member 69', such as a screw.

The shaft 63 of the fan motor 64 may be protruded toward the suction hole 38. The fan motor 64 may be located in front of the suction hole 38. The shaft 63 may be positioned in the fan motor 64 in a way to be backward protruded.

The fan motor 64 may be located between the suction hole 38 and the discharge panel 56. If the fan motor 64 is located between the suction hole 38 and the discharge panel 56, the volume of the freezer 2 can be further increased because a separate space where the fan motor 64 will be located is not necessary between the suction hole 38 and the inner casing 14.

The fan 66 is a blower for flowing air while being rotated when the fan motor 64 is driven, and may be rotated between the shroud 40 and the discharge panel 56. The fan 66 can be protected by the shroud 40 and the discharge panel 56. The fan 66 may be configured as a turbo fan for sucking air in the back and ventilating the air in a radial direction.

When the fan 66 is rotated, air located in the rear of the suction hole 38 may be forward sucked toward the fan 66, and may be ventilated by the fan 66 in the radial direction of the fan 66.

Unlike in the case of FIG. 5, if the fan motor unit installation unit 52 is backward protruded from the shroud 40, the fan motor unit 60 may be installed at the back of the shroud 40, and can ventilate air to the suction hole 38 in the state in which the fan motor unit 60 has been located in the rear of the suction hole 38.

In this case, the suction hole 38 may become a discharge flow channel with respect to the fan motor unit 60. If the fan motor unit 60 is positioned ahead of the suction hole 38 in an air flow direction, the motor bracket 62 and the fan motor 64, that is, part of the fan motor unit 60, may act as resistance to air sucked into the suction hole 38.

In contrast, as illustrated in FIG. 5, if the fan motor unit installation unit 52 is forward protruded from the shroud 40, the fan motor unit 60 can suck air into the suction hole 38 in the state in which the fan motor unit 60 has been located in front of the suction hole 38. In this case, the suction hole 38 may become a suction flow channel with respect to the fan motor unit 60.

If the fan motor unit 60 is located behind the suction hole 38 in the air flow direction, the motor bracket 62 and fan motor 64 of the fan motor unit 60 do not act as resistance to air sucked into the suction hole 38.

That is, if the fan motor unit installation unit 52 is forward protruded from the shroud 40, flow channel resistance can be reduced, the number of rotations of the fan 55 can be reduced compared to the same amount of wind, and power consumption and noise can be reduced, compared to the case where the fan motor unit installation unit 52 is backward protruded from the shroud 40.

The fan motor unit installation unit 52 may be protruded from the shroud 40 toward the discharge panel 56, may be positioned in the accommodation unit 48, and may be isolated from the circumference 67 of the fan 66 in the radial direction of the fan 66. At least one fan motor unit installation unit 52 may be positioned between the suction hole 38 and the housing unit 45.

In another embodiment, at least one fan motor unit installation unit 52 may be positioned between the suction hole 38 and the flow channel guide 47. A front end 52' of the fan motor unit installation unit 52 may be isolated from the back 57 of the discharge panel 56 back and forth. A distance T1 between the fan motor unit installation unit 52 and the back 57 of the discharge panel 56 may be greater than a thickness T2 of the motor bracket 62.

The fan motor unit installation unit 52 may include one or more boss parts 71, 72, 73, and 74 disposed in the shroud 40. A plurality of boss parts 71, 72, 73, and 74 may be disposed in the shroud 40. The plurality of boss parts 71, 72, 73, and 74 may be disposed in a way to be isolated from the shroud 40. The plurality of boss parts 71, 72, 73, and 74 may be disposed in the front 41' of the rear plate unit 41 and protruded toward the discharge panel 50.

A virtual circle C that connects the plurality of boss parts 71, 72, 73, and 74 may be greater than the fan 66. A central axis X1 of the virtual circle C that connects the plurality of boss parts 71, 72, 73, and 74 may be identical with a central axis X2 of the suction hole 38.

The first boss part 71 may be positioned between the suction hole 38 and the housing unit 46. The second boss part 72 may be positioned between the suction hole 38 and the flow channel guide 47. The third boss part 73 may be positioned between the suction hole 38 and the left plate unit 42. The fourth boss part 74 may be positioned between the suction hole 38 and the right plate unit 43.

Hereinafter, a task for assembling the shroud 40 and the fan motor unit 60 is described as follows.

First, the fan 66 may be installed in the shaft 63 of the fan motor 64. The assembly of the fan 66 and the fan motor 64 may be fastened to the motor bracket 62 using the fastening member, such as a screw. The fan motor unit 60 may be fastened to the shroud 40 in the state in which the fan 66 has been installed in the fan motor 64 and the fan motor 64 has been fastened to the motor bracket 62.

A worker may align the support leg 69 of the motor bracket 62 in front of the fan motor unit installation unit 52 back and forth, and may fasten the support leg 69 of the motor bracket 62 to the fan motor unit installation unit 52 using a fastening member, such as a screw, in front of the motor bracket 62.

If the motor bracket 62 is fastened to the fan motor unit installation unit 52 as described above, the central axis of the fan 66 and the central axis X2 of the suction hole 38 may be aligned back and forth.

If the fan motor unit 60 is fastened to the discharge panel 56 and the shroud 40 is then fastened to the discharge panel 56, the central axis of the fan 66 and the central axis X2 of the suction hole 38 may not be aligned due to an assembly tolerance, etc. Instead, if the fan motor unit 60 is directly fastened to the shroud 40, the central axis of the fan 66 and the central axis X2 of the suction hole 38 can be easily aligned, and an additional task for maintaining homocentricity can be minimized.

Hereinafter, actions of the fridge configured as described above are described as follows.

First, when the fan motor 64 is driven, the fan 66 may be rotated between the shroud 40 and the discharge panel 56.

An absorption force is generated around the suction hole 38 by the rotation of the fan 66. Air in the rear of the shroud 40 may be sucked into the suction hole 38.

Since the fan motor 64 is positioned in front of the suction hole 38, flow channel resistance to the air sucked into the suction hole 38 and noise attributable to the air can be minimized, and the air can be rapidly sucked into the suction hole 38.

The air passing through the suction hole 38 may be ventilated in the radial direction of the fan 66 by the fan 66. Thereafter, the air may be ventilated between the shroud 40 and the discharge panel 56.

Some of the air ventilated to the shroud 40 and the discharge panel 56 may be supplied to the freezer 2 through the discharge hole 28, and the remainder thereof may be supplied to the refrigerator 4 through the opening part 46 and the cold air discharge duct 32.

The air supplied to the freezer 2 may cool food, drink, etc. accommodated in the freezer 2. Thereafter, the air may be sucked into the heat exchange room 24 through the heat exchange room suction hole 26.

In contrast, the air supplied to the refrigerator 4 may cool food, drink, etc. accommodated in the refrigerator 4. Thereafter, the air may be sucked into the heat exchange room 24 through the cold air suction duct 30.

The air sucked into the heat exchange room 24 may be guided into the evaporator 8 by the shroud 40. Thereafter, the air may be cooled through a heat exchange with a refrigerant passing through the evaporator 8. The air cooled by the evaporator 8 may upward flow, and may be sucked into the suction hole 38 again.

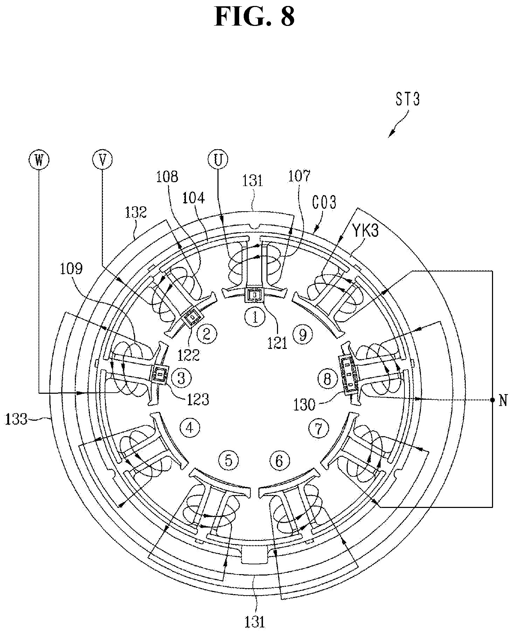

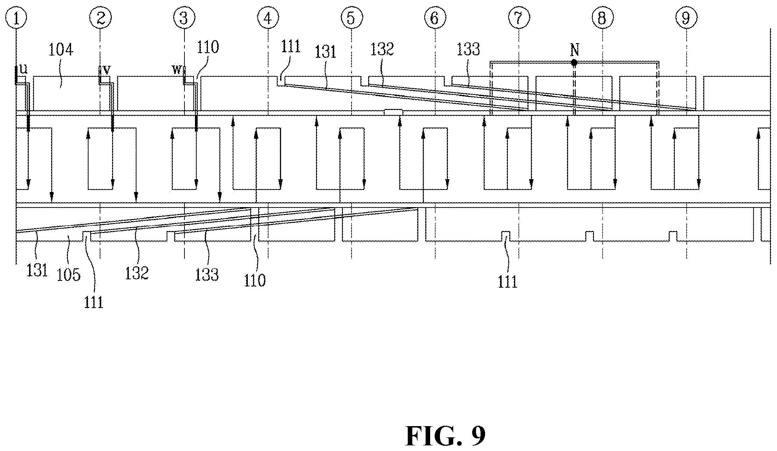

Hereinafter, the fan motor is described with reference to FIGS. 8 and 9.

FIG. 8 is a plan view schematically illustrating a method of winding a winding in the fan motor to which the stator according to an embodiment of the present disclosure may be applied. FIG. 9 is a side exploded view of the stator included in the fan motor illustrated in FIG. 8.

The fan motor illustrated in FIGS. 8 and 9 illustrates an example of a faction slot teeth-concentrated winding fan motor. The fan motor relates to an inner rotor type fan motor in which power having three phases is applied to the winding, 9 teeth are formed, and the rotor is located within the stator, but the present disclosure may be modified in various form and such modified examples belong to the technical spirit of the present disclosure.

For example, the fan motor according to an embodiment of the present disclosure may be an integer slot teeth-concentrated winding fan motor. Accordingly, the fan motor according to an embodiment of the present disclosure may be any one of the fraction slot teeth-concentrated winding fan motor and the integer slot teeth-concentrated winding fan motor.

A stator ST3, a rotor (not illustrated), and a PCB (not illustrated) are accommodated within the housing of the fan motor 64.

As illustrated in FIG. 8, the stator ST3 includes a stator core CO3. The stator core CO3 includes a yoke YK3, a plurality of teeth ① to ⑨, and insulators 104 and 105 which are inserted into the stator core CO3 and the teeth ① to ⑨ and on which windings 107, 108, and 109 are wound.

The rotor (not illustrated) maintains a state in which it has been connected to the shaft (not illustrated) within the stator ST3. The PCB (not illustrated) may be fixed over the stator ST3.

The shaft (not illustrated) and the rotor (not illustrated) may be supported by bearings in a way to be rotatable.

FIG. 8 illustrates a form in which the windings 107, 108, and 109 are wound on the nine teeth ① to ⑨ in a concentrated winding form and also illustrates a form in which power having three phases u, v, and w are supplied to the windings 107, 108, and 109 and the windings 107, 108, and 109 having the respective phases are wound at intervals of 120°.

In the stator having such a form, the u phase winding 107 is wound on the No. 1 tooth , the No. 4 tooth ④, and the No. 7 tooth ⑦, so that two connection lines 131 are formed in the u phase winding 107.

Furthermore, the v phase winding 108 is wound on the No. 2 tooth ②, the No. 5 tooth ⑤, and the No. 8 tooth ⑧, so that two connection lines 132 are formed. The w phase winding 109 is wound on the No. 3 tooth ③, the No. 6 tooth ⑥, and the No. 9 tooth ⑨, so that two connection lines 133 are formed.

The start ends of the phase windings 107, 108, and 109 are fixed to power terminals 121, 122, and 123 integrated with the top of the insulator, respectively. Furthermore, the tips of the phase windings are fixed to a neutral point terminal 130 integrated with the top of the insulator, thus forming a neutral point N.

That is, the connection terminals to which the phase windings 107, 108, and 109 are connected include the power terminals 121, 122, and 123 and the neutral point terminal 130.

In order to prevent interference with the rotor (not illustrated) and also prevent the height of the entre fan motor from increasing due to the connection terminals, all the connection terminals are preferably provided within the upper insulator 104. It is preferred that a provided height is higher than the stator core CO3, but is equal to the height of the end of the upper insulator 104 or lower than the height of the end of the upper insulator 104.

In order to easily form and fix the neutral point N, the neutral point terminal 130 may be integrated with the insulator.

Furthermore, in order to suppress a concern of an erroneous connection and also enable a connection with the PCB (not illustrated) through the power terminals although the PCB (not illustrated) is not soldered, the start ends of the phase windings 107, 108, and 109 may be fixed to the terminals 121, 122, and 123, respectively.

Grooves 110 and 111 are formed in the upper and lower insulators 104 and 105. The grooves may be provided in two forms having different depths. For example, three grooves 111 having a small depth may be consecutively formed in the circumferential direction of the upper insulator 104. Thereafter, three grooves 110 having a great depth may be consecutively formed in the circumferential direction of the upper insulator 104.

In contrast, three grooves 110 having a great depth may be consecutively formed in the lower insulator 105. Thereafter, three grooves 111 having a small depth may be consecutively formed in the lower insulator 105.

The windings 107, 108, and 109 may be wound in the following sequence.

First, the u phase winding 107 is wound on the No. 1 tooth ①. The wound winding 107 exits to the outside of the lower insulator 105 through the groove 111 having a small depth. Furthermore, in the state in which the u phase winding 107 has been trapped at the groove 111, the u phase winding 107 extends in an oblique line form along the outer circumference of the lower insulator 105 and is wound on the No. 4 tooth ④ again through the groove 112 having a great depth and adjacent to the No. 4 tooth ④. In this case, the connection line 131 of the winding wound on the No. 1 tooth ① and the No. 4 tooth ④ is located on the lower insulator 105 in an oblique line form.

Thereafter, the winding 107 wound on the No. 4 tooth ④ exists to the outside of the upper insulator 104 through the groove 111 having a small depth, and is wound on the No. 7 tooth ⑦ through the groove 112 having a great depth and adjacent to the No. 7 tooth ⑦. In this case, the connection line 131 is located on the upper insulator 104 in an oblique line form.

The start end of the u phase winding 107 is connected to the terminal 121 formed in the upper insulator 104 adjacent to the No. 1 tooth ①. The tip of the u phase winding 107 is connected to the neutral point terminal 130 formed in the upper insulator 104 adjacent to the No. 8 tooth ⑧ located in the middle among the teeth (Nos. 7, 8, and 9) where the tips of the respective phases are located.

Likewise, the v phase winding 108 is wound on the No. 2 tooth ②, the No. 5 tooth ⑤, and the No. 8 tooth ⑧. In this case, the connection line 132 is located on each of the lower insulator 105 and the upper insulator 104 in an oblique line form.

In this case, the start end of the v phase winding 108 is connected to the terminal 122 formed in the upper insulator 104 adjacent to the No. 2 tooth ②. The tip of the v phase winding 108 is connected to the neutral point terminal 130 formed in the upper insulator 104 adjacent to the No. 8 tooth ⑧ located at the tip of each phase.

Furthermore, likewise, the w phase winding 109 is wound on the No. 3 tooth ③, the No. 6 tooth ⑥, and the No. 9 tooth ⑨. In this case, the connection line 133 is located on each of the lower insulator 105 and the upper insulator 104 in an oblique line form.

In this case, the start end of the w phase winding 109 is connected to the terminal 123 formed in the upper insulator 104 adjacent to the No. 2 tooth ②. The tip of the w phase winding 109 is connected to the neutral point terminal 130 formed in the upper insulator 104 adjacent to the No. 8 tooth ⑧, that is, a tooth located in the middle among teeth where the tips of the respective phases are located.

A form of the windings wound as described above is illustrated in FIG. 9. As illustrated in FIG. 9, the connection lines 131, 132, and 133 of the respective phases are located in parallel in an oblique line form.

According to such a configuration, there are advantages in that a sufficient insulating distance can be secured between the connection lines of respective phase windings and the windings can be wound in a simple form because such connection lines are alternately located on the upper insulator 104 and the lower insulator 105.

Furthermore, the locations of the connection lines are automatically determined because the connection lines are trapped at the grooves 110 and 111 having different heights. Accordingly, it is not necessary to separately adjust or align the heights of the connection lines.

That is, if the phase windings have only to be wound and only the locations of the connection lines have only to be alternately placed up and down, the heights of the connection lines are automatically determined and thus an insulating distance between the connection lines is secured.

The upper insulator 104 and the lower insulator 105 may be integrated.

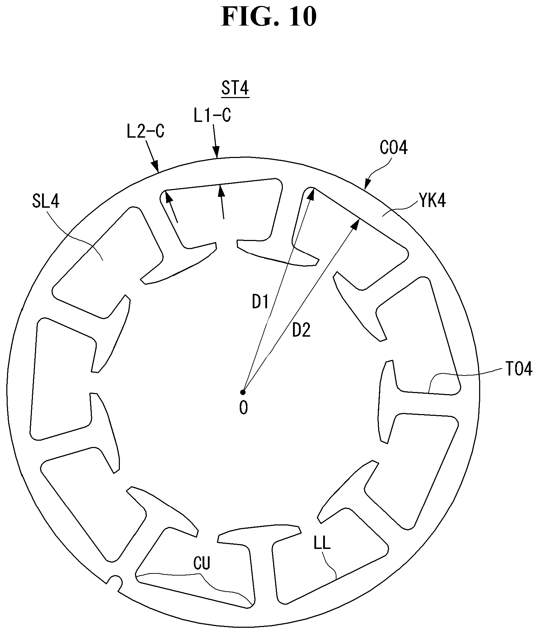

FIG. 10 is a plan view of a stator ST4 which may be applied to a fan motor according to an embodiment of the present disclosure. The stator illustrated in FIG. 10 may be applied to the fan motor illustrated in FIG. 8.

Referring to FIG. 10, the stator ST4 which may be applied to the fan motor according to an embodiment of the present disclosure includes a stator core CO4. The stator core CO4 includes a yoke YK4, a plurality of teeth TO4, and a plurality of slots SL4 each formed by adjacent two teeth TO4 and the yoke YK4 located between the adjacent two teeth TO4. The plurality of teeth TO4 may be protruded toward an internal central point O of the stator core CO4.

In this case, a first interval D1 between the internal central point O of the stator core CO4 and an inner circumferential surface of the yoke YK4 in a tooth portion is greater than a second interval D2 between the internal central point O of the stator core CO4 and the inner circumferential surface of the yoke YK4 at a central portion of the slot SL4 in a circumferential direction thereof.

Furthermore, if the outer circumference surface of the stator core CO4 is formed in a circle, a first length L2-C of the yoke YK4 at the tooth portion in a radial direction is smaller than a second length L1-C of the yoke YK4 in the radial direction at the central portion of the slot SL4 in the circumferential direction.

In this case, the second length L1-C may be identical with each of the lengths L1-A and L2-A of the yoke in the conventional stator core illustrated in FIG. 1. Furthermore, the second length L1-C may be identical with the length L2-B of the yoke in the conventional stator core illustrated in FIG. 2.

Furthermore, the first length L2-C may be identical with the length L1-B of the yoke in the conventional stator core illustrated in FIG. 2.

According to such a configuration, the area of the slot can be increase because the length of the tooth TO4 can be increased by a difference between the first interval D1 and the second interval D2 compared to the conventional stator cores of FIGS. 1 and 2.

The stator ST4 according to the present embodiment satisfies at least one of a characteristic related to a correlation between the first interval D1 and the second interval D2 and a characteristic related to a correlation between the first length L2-C and the second length L1-C.

In each slot SL4, the inner circumferential surface of the yoke YK4 may include two curvature parts CU located at respective tooth portions and one straight line part LL that connects ends of the curvature parts CU, facing each other, using a straight line.

In this case, the curvature of the curvature part CU may be properly adjusted by considering conditions, such as durability, reliability, productivity, and a space factor of a stator core.

That is, the curvature of the curvature part CU may be set as a size capable of increasing the space factor while maintaining durability, reliability, and productivity identical with or similar to that of the conventional stator core although the first length L2-C of the yoke YK2 at the tooth portion in the radial direction is reduced compared to the conventional stator illustrated in FIG. 1 and the conventional stator illustrated in FIG. 2.

However, if durability, reliability, productivity identical with or similar to those of the conventional stator core can be maintained, a face where the side of the tooth TO4 and the yoke YK4 come into contact with each other does not need to be essentially formed as a curvature part.

Furthermore, the central portion of the slot SL4 in the circumferential direction thereof may be located on a line that connects the internal central point O of the stator core CO4 and the middle point of the straight line part LL.

The length of the yoke YK4 in the radial length thereof may be the smallest at the tooth portion, and the central portion of the slot SL4 in the circumferential direction thereof may be the greatest.

Incidentally, a yoke portion having the smallest length in the radial length may be located between a winding limit line and a tooth.

Accordingly, if a portion where the side of the tooth TO4 and the yoke YK4 are met, that is, a connected portion, is formed as the curvature part, the yoke portion having the smallest length in the radial length may be located at a point where the curvature part and the straight line part are connected. If the portion where the side of the tooth TO4 and the yoke YK4 are met is not formed as the curvature part, the yoke portion having the smallest length in the radial length may be a portion where the side of the tooth TO4 and the yoke YK4 are met.

Furthermore, the yoke portion having the smallest length in the radial length, that is, a portion having the first length L2-C, may be located at two places within one slot.

When considering durability, reliability and productivity, the second length L1-C may be formed 1.5 mm or more. In this case, the first length L2-C may be formed 1 mm or more. A difference between the first length L2-C and the second length L1-C may be more than twice a winding completion diameter.

In this case, the "winding completion diameter" refers to a total diameter, that is, the sum of a coil and a coating located on the outer circumference surface of the coil. If a difference between the first length L2-C and the second length L1-C is more than twice the winding completion diameter, the space factor can be increased because the turn number of a winding is increased at least one times.

The first length L2-C may be more than 0.6 times the second length L1-C. That is, the first length L2-C may be more than 0.6 times the second length L1-C. Furthermore, a difference between the first length L2-C and the second length L1-C may be more than two times the winding completion diameter.

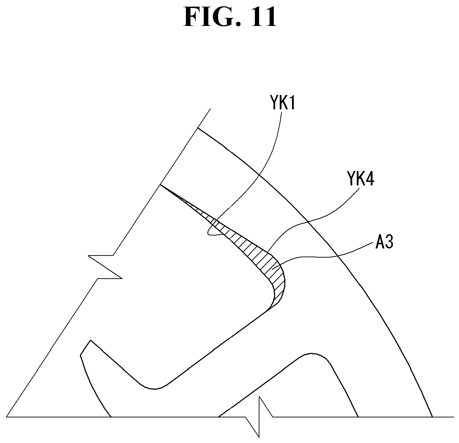

Referring to FIG. 11, assuming that the second length L1-C of the yoke YK4 of the stator according to an embodiment of the present disclosure is identical with the length L1-A, L2-A of the yoke of the conventional stator core illustrated in FIG. 1 and the length L2-B of the yoke of the conventional stator core illustrated in FIG. 2 and the first length L2-C of the yoke YK4 is identical with the length L1-B of the yoke of the conventional stator core illustrated in FIG. 2, it may be seen that in the stator according to an embodiment of the present disclosure, the area of the slot is increased by a third region A3 compared to the conventional stator illustrated in FIG. 1 and the area of the third region A3 is greater than the area of the first region A1 of the conventional stator illustrated in FIG. 2.

Accordingly, the stator according to an embodiment of the present disclosure can improve the space factor by an increased area of a slot because a portion where the length of the yoke in the radial direction thereof is a minimum is located between the winding limit line and the tooth. Accordingly, the space factor can be effectively improved compared to the conventional stators illustrated in FIGS. 1 and 2.

The fan motor including the stator ST4 having such a configuration may have a magnetic flux density of 1.7 tesla or less. Preferably, the fan motor may have a magnetic flux density of 1.3 tesla or less.

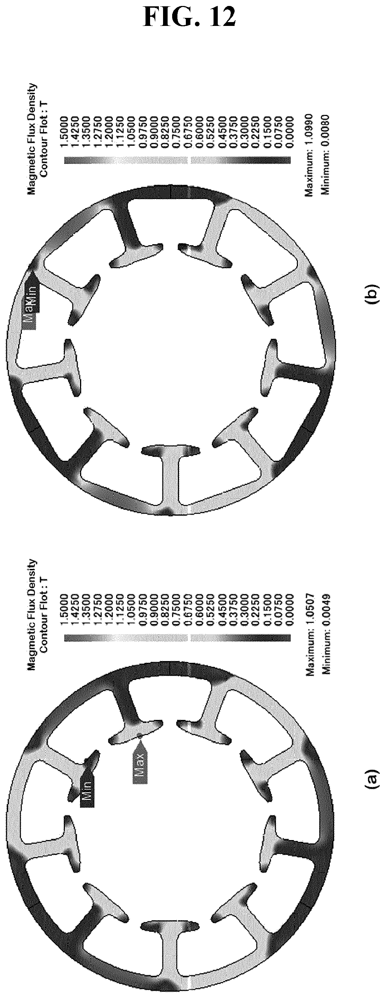

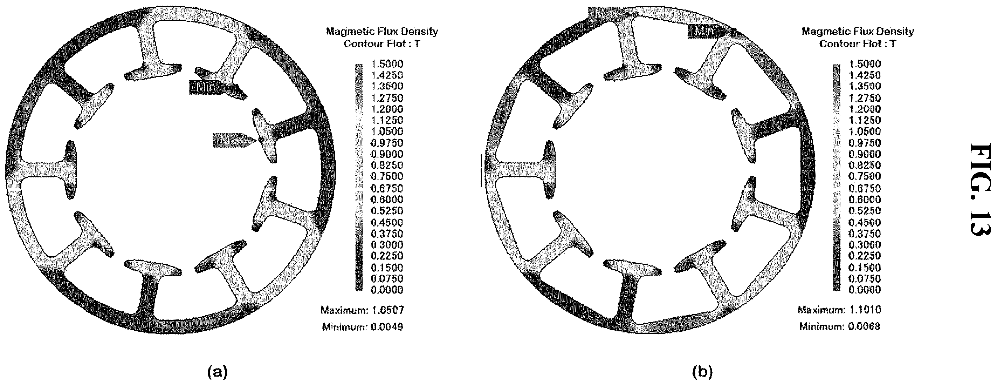

FIGS. 12 and 13 are diagrams for comparing magnetic flux density distributions of the conventional stator illustrated in FIG. 1 and the stator according to an embodiment of the present disclosure illustrated in FIG. 10. FIG. 12 illustrates a case where the turn numbers of windings are the same and the diameters of the windings are different. FIG. 13 illustrates a case where the turn numbers of windings are different and the diameters of the windings are the same.

Furthermore, in FIGS. 12 and 13, (a) illustrates a magnetic flux density distribution of the conventional stator, and (b) illustrates a magnetic flux density distribution of the stator according to an embodiment of the present disclosure.

It was found that the stator according to an embodiment of the present disclosure can increase the space factor by about 7% to 10% compared to the conventional stator illustrated in FIG. 1 and can increase the space factor by about 5% to 7% compared to the conventional stator illustrated in FIG. 2.

Furthermore, when comparing the stator according to an embodiment of the present disclosure with the conventional stators illustrated in FIGS. 1 and 2, if a winding is wound in the same turn number, the diameter of the winding can be increased as much as the increased area of a slot compared to the stators illustrated in FIGS. 1 and 2.

Accordingly, as a result of a comparison between a conventional fan motor including the conventional stator illustrated in FIG. 1 and a fan motor including the stator according to an embodiment of the present disclosure, torque of the fan motor according to an embodiment of the present disclosure was measured as 99.977%, assuming that torque of the conventional fan motor was 100%.

Accordingly, it may be seen that the fan motor according to an embodiment of the present disclosure can implement torque similar to that of the fan motor including the conventional stator illustrated in FIG. 1.

However, the fan motor according to an embodiment of the present disclosure may increase the diameter of a winding compared to the fan motor including the conventional stator illustrated in FIG. 1.

Accordingly, as a result of a comparison between the conventional fan motor including the conventional stator illustrated in FIG. 1 and the fan motor including the stator according to an embodiment of the present disclosure, a copper loss of the fan motor according to an embodiment of the present disclosure was measured as 90%, assuming that a copper loss of the conventional fan motor was 100%.

Accordingly, the fan motor according to an embodiment of the present disclosure can decrease a copper loss compared to the fan motor including the conventional stator illustrated in FIG. 1 and thus can improve efficiency.

Furthermore, when comparing the stator according to an embodiment of the present disclosure with the conventional stators illustrated in FIGS. 1 and 2, if windings having the same diameter are wound, the turn number of the winding can be increased as much as the increased area of the slot compared to the stators illustrated in FIGS. 1 and 2.

Accordingly, as a result of a comparison between the conventional fan motor including the conventional stator illustrated in FIG. 1 and the fan motor including the stator according to an embodiment of the present disclosure, a copper loss of the fan motor according to an embodiment of the present disclosure was measured 104.8%, assuming that a copper loss of the conventional fan motor was 100%.

Accordingly, the fan motor according to an embodiment of the present disclosure can increase a copper loss compared to the fan motor including the conventional stator illustrated in FIG. 1.

However, the fan motor according to an embodiment of the present disclosure can increase the turn number compared to the fan motor including the conventional stator illustrated in FIG. 1.

Accordingly, as a result of a comparison between the conventional fan motor including the conventional stator illustrated in FIG. 1 and the fan motor including the stator according to an embodiment of the present disclosure, torque of the fan motor according to an embodiment of the present disclosure was measured as 109.5%, assuming that torque of the conventional fan motor was 100%.

As described above, the fan motor according to an embodiment of the present disclosure increases a copper loss due to the increased turn number compared to the conventional fan motor, but increases an output density because torque is increased at a ratio greater than a ratio at which the copper loss is increased, and thus improves efficiency.

## Claims

1. An inner rotor type fan motor comprising:
a stator (ST4) including a stator core (CO4),
wherein the stator core (CO4) includes:
a yoke (YK4);
nine teeth (TO4); and
windings (107, 108, 109) wound on the nine teeth in a concentrated winding form having three phases (u, v, w) supplied to the windings (107, 108, 109);
a plurality of slots (SL4) each formed by two teeth (TO4) adjacent to each other and the yoke (YK4) positioned between the two teeth (TO4),
wherein a first interval (D1) between an internal central point (O) of the stator core (CO4) and an inner circumferential surface of the yoke (YK4) at a tooth portion is greater than a second interval (D2) between the internal central point (O) of the stator core (CO4) and an inner circumferential surface of the yoke (YK4) at a central part of the slot (SL4) in a circumferential direction thereof,
wherein in each slot, a first length (L2-C) of the yoke (YK4) in a radial direction at the tooth portion is smaller than a second length (L1-C) of the yoke (YK4) in the radial direction at the central part of the slot in the circumferential direction thereof,
wherein in each of the slots (SL4), the inner circumferential surface of the yoke (YK4) includes two curvature parts (CU) disposed in each tooth portion and one straight line part (LL) connecting, by a straight line, ends of the curvature parts (CU) facing each other, and
wherein the central part of the slot (SL4) in the circumferential direction thereof is located on a line that connects the internal central point (O) of the stator core (CO4) and a middle point of the one straight line part (LL).

2. The inner rotor type fan motor of claim 1, wherein a length of the yoke (YK4) in the radial direction thereof is a smallest in the tooth portion, and is a greatest at the central part of the slot (SL4) in the circumferential direction thereof.

3. The inner rotor type fan motor of claim 2,
wherein the second length (L1-C) is 1.5 mm or more, and
wherein the first length (L2-C) is 1 mm or more.

4. The inner rotor type fan motor of claim 2, wherein the first length (L2-C) is more than 0.6 times the second length (L1-C).

5. The inner rotor type fan motor of any one of claims 1 to 4, wherein the fan motor has a magnetic flux density of 1.7 tesla or less.

6. The inner rotor type fan motor of claim 1, where the stator core (CO4) has a circular outer circumference surface.

7. The fan motor of claim 6, wherein a length of the yoke (YK4) in the radial direction thereof is a smallest in the tooth portion, and is a greatest in the central part of the slot (SL4) in the circumferential direction thereof.

8. The fan motor of any one of claims 6 to 7,
wherein the second length (L1-C) is 1.5 mm or more, and
wherein the first length (L2-C) is 1 mm or more.

9. The fan motor of any one of claims 6 to 7, wherein the first length (L2-C) is more than 0.6 times the second length (L1-C).

10. The fan motor of any one of claims 6 to 9, wherein the fan motor has a magnetic flux density of 1.7 tesla or less.

11. A refrigerator comprising:
the inner rotor type fan motor according to any one of claims 1 to 10;
a storeroom for storing food and drink; and
a ventilation fan driven by the fan motor, for flowing a cold air into the storeroom.

## Patentansprüche

1. Innenrotor-Ventilatormotor, der aufweist
einen Stator (ST4), der einen Statorkern (CO4) aufweist,
wobei der Statorkern (CO4) aufweist:
ein Joch (YK4);
neun Zähne (TO4); und
Wicklungen (107, 108, 109), die auf die neun Zähne in einer konzentrierten Wicklungsform gewickelt sind, mit drei Phasen (u, v, w), die den Wicklungen (107, 108, 109) zugeführt werden;
mehrere Schlitze (SL4), die jeweils durch zwei zueinander benachbarte Zähne (TO4) und das zwischen den beiden Zähnen (TO4) angeordnete Joch (YK4) gebildet werden,
wobei ein erstes Intervall (D1) zwischen einem inneren Mittelpunkt (O) des Statorkerns (CO4) und einer Innenumfangsfläche des Jochs (YK4) an einem Zahnabschnitt größer ist als ein zweites Intervall (D2) zwischen dem inneren Mittelpunkt (O) des Statorkerns (CO4) und einer Innenumfangsfläche des Jochs (YK4) an einem mittleren Teil des Schlitzes (SL4) in dessen Umfangsrichtung,
wobei in jedem Schlitz eine erste Länge (L2-C) des Jochs (YK4) in radialer Richtung an dem Zahnabschnitt kleiner ist als eine zweite Länge (L1-C) des Jochs (YK4) in der radialen Richtung an dem mittleren Teil des Schlitzes in dessen Umfangsrichtung,
wobei in jedem der Schlitze (SL4) die Innenumfangsfläche des Jochs (YK4) zwei Krümmungsteile (CU), die in jedem Zahnabschnitt angeordnet sind, und einen geraden Linienteil (LL) aufweist, der durch eine gerade Linie Enden der Krümmungsteile (CU) verbindet, die einander zugewandt sind, und
wobei der mittlere Teil des Schlitzes (SL4) in dessen Umfangsrichtung auf einer Linie liegt, die den inneren Mittelpunkt (O) des Statorkerns (CO4) und einen Mittelpunkt des einen geraden Linienteils (LL) verbindet.

2. Innenrotor-Ventilatormotor nach Anspruch 1, wobei die Länge des Jochs (YK4) in dessen Radialrichtung im Zahnabschnitt am kleinsten ist und im mittleren Teil des Schlitzes (SL4) in dessen Umfangsrichtung am größten ist.

3. Innenrotor-Ventilatormotor nach Anspruch 2,
wobei die zweite Länge (L1-C) 1,5 mm oder mehr beträgt, und
wobei die erste Länge (L2-C) 1 mm oder mehr beträgt.

4. Innenrotor-Ventilatormotor nach Anspruch 2, wobei die erste Länge (L2-C) mehr als das 0,6-fache der zweiten Länge (L1-C) beträgt.

5. Innenrotor-Ventilatormotor nach einem der Ansprüche 1 bis 4, wobei der Ventilatormotor eine Magnetflussdichte von 1,7 Tesla oder weniger aufweist.

6. Innenrotor-Ventilatormotor nach Anspruch 1, wobei der Statorkern (CO4) eine kreisförmige Außenumfangsfläche aufweist.

7. Ventilatormotor nach Anspruch 6, wobei eine Länge des Jochs (YK4) in dessen Radialrichtung im Zahnbereich am kleinsten ist und im mittleren Teil des Schlitzes (SL4) in seiner Umfangsrichtung am größten ist.

8. Ventilatormotor nach einem der Ansprüche 6 bis 7,
wobei die zweite Länge (L1-C) 1,5 mm oder mehr beträgt und
wobei die erste Länge (L2-C) 1 mm oder mehr beträgt.

9. Ventilatormotor nach einem der Ansprüche 6 bis 7, wobei die erste Länge (L2-C) mehr als das 0,6-fache der zweiten Länge (L1-C) beträgt.

10. Ventilatormotor nach einem der Ansprüche 6 bis 9, wobei der Ventilatormotor eine Magnetflussdichte von 1,7 Tesla oder weniger aufweist.

11. Kühlschrank, der aufweist:
den Innenrotor-Ventilatormotor nach einem der Ansprüche 1 bis 10;
einen Lagerraum zum Aufbewahren von Lebensmitteln und Getränken; und
einen vom Ventilatormotor angetriebenen Ventilator zum Einleiten von kalter Luft in den Lagerraum.

## Revendications

1. Moteur de ventilateur à rotor interne, comprenant :
un stator (ST4) comportant un noyau de stator (CO4),
où le noyau de stator (CO4) comporte :
une culasse (YK4) ;
neuf dents (TO4) ; et
des enroulements (107, 108, 109) enroulés sur les neuf dents sous forme d'enroulement concentré présentant trois phases (u, v, w) appliquées aux enroulements (107, 108, 109) ;
une pluralité de créneaux (SL4) formés chacun par deux dents (TO4) adjacentes l'une à l'autre et la culasse (YK4) disposée entre les deux dents (TO4),
où un premier intervalle (D1) entre un point intérieur central (O) du noyau de stator (CO4) et une surface circonférentielle intérieure de la culasse (YK4) dans une partie de dent est supérieur à un deuxième intervalle (D2) entre le point intérieur central (O) du noyau de stator (CO4) et une surface circonférentielle intérieure de la culasse (YK4) dans une partie centrale du créneau (SL4) dans la direction circonférentielle de celui-ci,
où, dans chaque créneau, une première longueur (L2-C) de la culasse (YK4) dans la direction radiale dans la partie de dent est inférieure à une deuxième longueur (L1-C) de la culasse (YK4) dans la direction radiale dans la partie centrale du créneau dans la direction circonférentielle de celui-ci,
où, dans chaque créneau (SL4), la surface circonférentielle intérieure de la culasse (YK4) comprend deux parties courbes (CU) disposées dans chaque partie de dent et une partie rectiligne (LL) reliant par une ligne droite les extrémités des parties courbes (CU) opposées, et
où la partie centrale du créneau (SL4) dans la direction circonférentielle de celui-ci est située sur une ligne reliant le point intérieur central (O) du noyau de stator (CO4) à un point médian de la partie rectiligne (LL).

2. Moteur de ventilateur à rotor interne selon la revendication 1, où la longueur de la culasse (YK4) dans la direction radiale de celle-ci est minimale dans la partie de dent et maximale dans la partie centrale du créneau (SL4) dans la direction circonférentielle de celui-ci.

3. Moteur de ventilateur à rotor interne selon la revendication 2,
où la deuxième longueur (L1-C) est égale ou supérieure à 1,5 mm, et
où la première longueur (L2-C) est égale ou supérieure à 1 mm.

4. Moteur de ventilateur à rotor interne selon la revendication 2, où la première longueur (L2-C) est supérieure à 0,6 fois la deuxième longueur (L1-C).

5. Moteur de ventilateur à rotor interne selon l'une des revendications 1 à 4, où le moteur de ventilateur a une densité de flux magnétique égale ou inférieure à 1,7 tesla.

6. Moteur de ventilateur à rotor interne selon la revendication 1, où le noyau de stator (CO4) présente une surface circonférentielle extérieure circulaire.

7. Moteur de ventilateur selon la revendication 6, où la longueur de la culasse (YK4) dans la direction radiale est minimale dans la partie de dent et maximale dans la partie centrale du créneau (SL4) dans la direction circonférentielle de celui-ci.

8. Moteur de ventilateur selon la revendication 6 ou la revendication 7,
où la deuxième longueur (L1-C) est égale ou supérieure à 1,5 mm, et
où la première longueur (L2-C) est égale ou supérieure à 1 mm.

9. Moteur de ventilateur selon la revendication 6 ou la revendication 7, où la première longueur (L2-C) est supérieure à 0,6 fois la deuxième longueur (L1-C).

10. Moteur de ventilateur selon l'une des revendications 6 à 9, où le moteur de ventilateur a une densité de flux magnétique égale ou inférieure à 1,7 tesla.

11. Réfrigérateur, comprenant :
le moteur de ventilateur à rotor interne selon l'une des revendications 1 à 10 ;
un compartiment de stockage pour stocker des aliments et des boissons ; et
un ventilateur entraîné par le moteur de ventilateur pour refouler de l'air froid dans le compartiment de stockage.
